# EUROPÄISCHE PATENTSCHRIFT

(11) **EP 3 678 845 B1**
(45) Veröffentlichungstag und Bekanntmachung des Hinweises auf die Patenterteilung: **16.02.2022**
(21) Anmeldenummer: 18765878.6
(22) Anmeldetag: 07.09.2018
(51) Int. Cl.: B29C 49/80

(54) **VERFAHREN UND VORRICHTUNG ZUM ÜBERPRÜFEN EINES UMFORMUNGSVORGANGS VON KUNSTSTOFFVORFORMLINGEN ZU KUNSTSTOFFBEHÄLTNISSEN**
PROCESS AND DEVICE FOR VERIFICATION OF A FORMING STEP OF PLASTIC PREFORMS INTO PLASTIC CONTAINERS
PROCÉDÉ ET DISPOSITIF POUR LA VÉRIFICATION DE MOULAGE DES PRÉFORMES EN MATIÈRE PLASTIQUE À CONTENEURS EN MATIÈRE PLASTIQUE

(30) Priorität: 07.09.2017 DE 102017120612
(43) Veröffentlichungstag der Anmeldung: 15.07.2020
(73) Patentinhaber: Krones AG, 93073 Neutraubling (DE)
(72) Erfinder: STOPFER, Andreas, 93073 Neutraubling (DE); PIANA, Stefan, 93073 Neutraubling (DE); SCHOBER, Stefan, 93073 Neutraubling (DE)
(74) Vertreter: Bittner, Bernhard
(86) Internationale Anmeldenummer: PCT/EP2018/074108
(87) Internationale Veröffentlichungsnummer: WO 2019/048598

(56) Entgegenhaltungen:
- EP-A2- 2 835 248
- DE-A1-102011 056 627

## Beschreibung

Kunststoffbehältnisse, beispielsweise aus dem Material PET, werden oftmals auf Streckblasmaschinen aus Kunststoffvorformlingen hergestellt. Dabei ist es bekannt, dass Kunststoffvorformlinge zunächst erwärmt werden und in diesem erwärmten Zustand durch ein gasförmiges Medium und insbesondere Druckluft zu Kunststoffflaschen umgeformt und insbesondere geblasen werden. Auch wäre es grundsätzlich möglich, dass die Kunststoffvorformlinge unmittelbar durch eine Flüssigkeit wie insbesondere aber nicht ausschließlich ein abzufüllendes Produkt expandiert werden.

Um die Qualität der Produkte und damit auch eines Produktionsprozesses sicherzustellen, ist es aus dem Stand der Technik bekannt, dass in dem Auslauf einer Maschine ein Inspektionssystem eine Kontrolle beispielsweise eines Wandstärkenprofils der geblasenen Behältnisse durchführt. Sollte der Produktionsprozess Mängel aufweisen, dann äußert sich dies in der Regel in einer inadäquaten Verteilung des Behältermaterials bzw. der Wandungsdicke entlang der Seitenwände und insbesondere entlang der Seitenwände in Richtung einer Behältnisachse bzw. einer Längsrichtung der Behältnisse. Um die einwandfreie Funktion dieses Inspektionssystems sicherzustellen und mögliche Ausfälle oder Fehlmessungen frühzeitig zu erkennen, ist es aus dem Stand der Technik bekannt, destruktive Tests durchzuführen. Dies bedeutet, dass einzelne aus dem Produktionsprozess entnommene Behältnisse zerschnitten und entsprechend vermessen werden. EP 2 835 248 oder DE 10 2011 056627 offenbaren derartige Vorrichtungen und Verfahren zum Umformen von Kunststoffvorformlingen in Kunststoffbehälter und zum Prüfen der Wanddicke der fertig geblasenen Kunststoffbehälter.

Durch das Zerschneiden und Vermessen der Behältnisse entsteht also sowohl ein materieller als auch ein insbesondere personeller Aufwand. Der materielle Aufwand umfasst sowohl den zerstörten Behälter als auch die Prüf- und Messmittel. Als personeller Aufwand ist das Laborpersonal zu nennen. Darüber hinaus ist dieses manuelle Verfahren auch in einem hohen Maß fehleranfällig, insbesondere bei der Dokumentation.

Der vorliegenden Erfindung liegt daher die Aufgabe zugrunde, ein Testverfahren und insbesondere ein automatisiertes Testbehälterprogramm vorzustellen, um den Nachweis einer korrekten Funktionsweise einer Inspektionseinrichtung und insbesondere einer Seitenwandmesseinrichtung zur Verfügung zu stellen, welches den Aufwand und die Fehlerquellen des Standes der Technik deutlich verringert. Diese Aufgaben werden erfindungsgemäß durch ein Verfahren und eine Vorrichtung nach den unabhängigen Patentansprüchen erreicht. Vorteilhafte Ausführungsformen und Weiterbildungen sind Gegenstand der Unteransprüche.

Bei einem erfindungsgemäßen Verfahren zum Überprüfen einer Vorrichtung zum Umformen von Kunststoffvorformlingen zu Kunststoffbehältnissen weist die Vorrichtung eine Transporteinrichtung auf, an der eine Vielzahl von Umformungsstationen zum Umformen von Kunststoffvorformlingen zu Kunststoffbehältnissen angeordnet ist, sowie eine in einer Transportrichtung der Kunststoffbehältnisse nach den Umformungsstationen angeordnete Überprüfungseinrichtung, welche in wenigstens einem Bereich der hergestellten Kunststoffbehältnisse eine physikalische Eigenschaft der Kunststoffbehältnisse und insbesondere eine Wandungsdicke der Kunststoffbehältnisse bzw. deren Kunststoffmaterials bestimmt. Dabei ist es möglich, dass die Wandungsdicke unmittelbar bestimmt wird. Es wäre jedoch auch möglich, dass die Wandungsdicke mittelbar bestimmt wird, etwa über einen weiteren Messwert wie etwa eine Transparenz der Wandung.

Dabei finden erfindungsgemäß die folgenden Schritte statt, wonach zunächst ein Testbehältnis eingebracht wird, welches wenigstens abschnittsweise eine vorgegebene und/oder bekannte Wandungsdicke aufweist. In einem weiteren Verfahrensschritt wird diese erste Wandungsdicke insbesondere mit Hilfe der Überprüfungseinrichtung in wenigstens einem Bereich des Behältnisses überprüft. Bevorzugt wird die Überprüfungseinrichtung selbst auch durch diese Überprüfung bzw. Messung der Wandungsdicke überprüft.

Es wird daher vorgeschlagen, dass in einem insbesondere speziellen Testbehältnisprogramm dieser Test durchgeführt wird. Dabei ist es möglich, dass dieses Programm beispielsweise nach einem Produktionsstart, nach einem Sortenwechsel, oder nach einem Benutzerwechsel und/oder in vorgegebenen und insbesondere regelmäßigen Zeitabständen durchgeführt wird. Des Weiteren kann das Testbehälterprogramm bei Bedarf auch manuell gestartet werden. Die gemessenen Werte werden dabei insbesondere abgespeichert und/oder protokolliert, wobei bevorzugt diese Abspeicherung auch mit einem Datum erfolgt und insbesondere auch mit anderen Größen, etwa auch Parametern, welche das entsprechende Testbehältnis eindeutig identifizieren.

Bevorzugt wird vor der Durchführung des hier beschriebenen Verfahrens eine Maschine leergefahren, das heißt es werden aus dem Produktionsstrang die Behältnisse entnommen bzw. keine weiteren Kunststoffvorformlinge oder Behältnisse mehr zugeführt.

Bevorzugt weist jede einzelne der Umformungsstationen jeweils eine Blasform auf, wobei diese Blasform in ihrem Inneren einen Hohlraum ausbildet, innerhalb dessen die Kunststoffvorformlinge zu den Kunststoffbehältnissen umformbar sind. Weiterhin weist besonders bevorzugt diese Blasform Seitenteile und ein Bodenteil auf, welche gemeinsam diesen besagten Hohlraum ausbilden.

Bei einem bevorzugten Verfahren sind die Testbehältnisse durch die Vorrichtung selbst hergestellte Testbehältnisse, also insbesondere blasgeformte Behältnisse.

Es wird daher insbesondere ein Testbehälterprogramm vorgeschlagen, das beispielsweise nach einem Programmstart, nach einem Sortenwechsel, bei einem Benutzerwechsel und besonders bevorzugt auch in regelmäßigen Abständen aufgerufen wird. Dabei wird beispielsweise einem Maschinenbediener, z.B. durch eine Säulenleuchte oder ein Hup-Signal angezeigt, dass er die für eine aktuelle Behältnissorte bereitgestellten Testbehältnisse in den Produktionsstrom bringen soll. Dies kann beispielsweise durch Leerlaufen und Anhalten einer Streckblasmaschine und bevorzugt durch ein manuelles Einklinken der Testbehältnisse in entsprechende Halteklammern der Vorrichtung erfolgen. Wie unten genauer beschrieben, weist zu diesem Zweck bevorzugt die Vorrichtung einen Bereich auf, in dem durch einen Benutzer ein derartiges Einklinken von Behältnissen erfolgen kann. Bevorzugt werden bei einem Verfahren nicht nur einzelne Testbehältnisse zugeführt, sondern ein Satz an Testbehältnissen. Dieser Satz an Testbehältnissen kann dabei unterschiedliche Wandungsstärken aufweisen. Es wird daher bevorzugt eine Möglichkeit geschaffen, um insbesondere in einem Maschinenstillstand in einem vorgegebenen Bereich eine Vielzahl von Testbehältnissen und insbesondere einen Satz an Testbehältnissen der Anlage zuführen zu können.

Bei einem bevorzugten Verfahren wird eine von der Überprüfungseinrichtung festgestellte Wandungsdicke mit einer bekannten Wandungsdicke verglichen. Auf diese Weise ist es möglich, die Überprüfungseinrichtung selbst zu überprüfen. Wie oben erwähnt kann dabei ein Testbehältnis in den Produktionsstrom eingebracht werden und die gemessene Wandstärke mit einer gegebenen bzw. bekannten Wandstärke des Testbehältnisses verglichen werden. Dabei können auch Testbehältnisse mit mehreren Wandstärken und auch in verschiedenen Höhen verwendet werden sowie auch nur jeweils ein Testbehältnis mit nur einer Wandstärke.

Bei einem weiteren bevorzugten Verfahren wird das wenigstens eine Testbehältnis in einer Transportrichtung der Kunststoffbehältnisse nach den Umformungsstationen eingebracht.

Bei einem weiteren bevorzugten Verfahren bestimmt die Überprüfungseinrichtung in mehreren Bereichen des Kunststoffbehältnisses dessen Wandungsdicke, wobei diese mehreren Bereiche bevorzugt in einer Längsrichtung des Kunststoffbehältnisses übereinander angeordnet sind. Besonders bevorzugt bestimmt die Überprüfungseinrichtung die Wandungsdicke in wenigstens zwei derartigen Bereichen, bevorzugt in wenigstens drei derartigen Bereichen, bevorzugt in wenigstens vier derartigen Bereichen und besonders bevorzugt in wenigstens fünf derartigen Bereichen.

Bei einem weiteren bevorzugten Verfahren weist das Testbehältnis in seiner Längsrichtung abweichende Wandungsstärken auf.

Wie oben erwähnt werden bevorzugt mehrere Testbehältnisse in das Verfahren eingebracht bzw. mittels der Überprüfungseinrichtung überprüft. Auf diese Weise kann die Genauigkeit der Überprüfung erhöht werden und insbesondere kann die Überprüfungseinrichtung in unterschiedlichen Messbereichen getestet werden. So können insbesondere auch einzelne Sensorelemente der Überprüfungseinrichtung zuverlässig überprüft werden.

Bei einem weiteren bevorzugten Verfahren wird überprüft, ob der von der Überprüfungseinrichtung festgestellte Wert der Wandungsdicke in einem bestimmten Toleranzbereich liegt. Dabei kann ein Toleranzbereich um die tatsächliche Wandungsdicke des Testbehältnisses gebildet werden. Sofern ein von der Überprüfungseinrichtung gemessener Wert für die Wandungsdicke innerhalb dieses Toleranzfensters liegt, wird die jeweilige Sensoreinrichtung als ordnungsgemäß angesehen. Das Festlegen derartiger Fenster bzw. Toleranzen und auch das weitere Vorgehen im Falle einer Über- oder Unterschreitung dieser Toleranzen obliegt dabei dem Fachpersonal.

Bei einem bevorzugten Verfahren sind die Testbehältnisse zusätzlich in geeigneter Weise gekennzeichnet, beispielsweise durch einen zweidimensionalen Code, einen Reflexstreifen oder Transponder gekennzeichnet, und werden bevorzugt auch als solche von der Überprüfungseinrichtung erkannt. Auf diese Weise können die Testbehältnisse in jedem Falle nach der Überprüfung aus einem Produktionsstrom ausgeleitet werden.

Nachdem alle Testbehältnisse durch die Maschine gelaufen sind, wird bevorzugt überprüft, ob alle Vorgaben für die Überprüfungseinrichtung erfüllt sind. Ist dies der Fall, kann der Testmodus bzw. das Testverfahren beendet werden und die Produktion kann aufgenommen bzw. fortgeführt werden. Bei einer Nichterfüllung wird bevorzugt der Bediener aufgefordert, die nicht erkannten Behältnisse erneut zu testen.

Falls ein Testlauf mehrere Male nicht erfolgreich verläuft, kann bevorzugt die Maschine angehalten werden. Über das weitere Vorgehen, wie beispielsweise eine Fehlersuche, kann insbesondere eine Fachperson entscheiden, und auch darüber entscheiden, welche Aktionen ausgeführt werden sollen.

Besonders bevorzugt wird jedes Testergebnis protokolliert und abgespeichert. Dies kann beispielsweise in einer Logdatei erfolgen.

In dieser Logdatei kann mitprotokolliert werden und die jeweiligen Messergebnisse können detailliert aufgelistet werden. Bevorzugt werden die Testbehältnisse mittels der Umformungseinrichtung selbst hergestellt. Dabei kann beispielsweise ein derartiges Testbehältnis mittels der Vorrichtung selbst etwa durch Streckblasen von Kunststoffvorformlingen mit zu hohem oder zu geringem Gewicht oder auch durch bewusstes Verstellen von Parametern der Produktionsmaschine hergestellt werden, beispielsweise durch bewusstes Verstellen der Temperatur in den unterschiedlichen Heizzonen eines Ofens zum Erwärmen der Kunststoffvorformlinge.

Durch die erfindungsgemäße Vorgehensweise können die Fehlerquellen, die durch die manuelle Überprüfung und Dokumentation entstehen, beseitigt werden. Weiterhin kann Personal, können Prüfmittel und auch produzierte Behälter eingespart werden.

Bei einem bevorzugten Verfahren wird eine automatisierte Dokumentation der aufgenommenen Ergebnisse durchgeführt. Durch diese automatisierte Dokumentation können ebenfalls Fehlerquellen vermieden werden. Genauer gesagt kann jede Überprüfung der Testbehältnisse protokolliert werden und insbesondere auch mit Zuordnung zu dem jeweils überprüften Behältnis. Dabei können insbesondere auch die Ergebnisse protokolliert werden und insbesondere die Ergebnisse des Vergleichs zwischen den gemessenen Wandstärken und den tatsächlichen Ist-Wandstärken der Behältnisse. Diese automatisierte Dokumentation kann auch automatisiert abgespeichert werden, kann beispielsweise automatisiert in der zentralen EDV der Maschine oder eines Unternehmens abgespeichert werden. Auf diese Weise kann eine nachweislich hohe Produktqualität sichergestellt werden.

Bei einem weiteren bevorzugten Verfahren werden für wenigstens ein Testbehältnis Daten ausgegeben und insbesondere Wanddicken, welche für das Testbehältnis charakteristisch sind. Diese Daten können beispielsweise über eine Anzeigeeinrichtung wie ein Display ausgegeben werden. Besonders bevorzugt werden dabei diese Daten in einer graphischen Darstellung etwa als Histogramm ausgegeben. Dabei ist es möglich, dass ein Histogramm mit Ist-Werten, das heißt mit gemessenen Wanddicken, ausgegeben wird sowie ein Vergleichsdiagramm, welches die entsprechenden tatsächlichen Referenzwerte der Wandungsdicken aufweist.

Bei einem weiteren bevorzugten Verfahren wird über die durchgeführten Überprüfungen ein Protokoll erstellt. In einem solchen Protokoll kann beispielsweise ein zeitlicher Verlauf abgespeichert werden. Auch können Zeitstempel vorgesehen sein bzw. erstellt werden. Daneben kann in dem Protokoll auch festgehalten werden, welcher Benutzer die jeweiligen Messungen durchgeführt hat.

Daneben können auch die Ergebnisse protokolliert werden insbesondere Messergebnisse, aus denen sich schließen lässt, welche Sensoreinrichtungen Messergebnisse liefern, die innerhalb eines vorgegebenen Toleranzfensters liegen. Bevorzugt sind derartige Toleranzfenster durch einen Benutzer vorgebbar und insbesondere änderbar. Dabei kann es sich um Toleranzfenster handeln, welches festlegt, welche Abweichungen zwischen gemessenen Werten für die Wandungsdicke und den tatsächlichen und bekannten Werten für die Wandungsdicke noch hingenommen werden.

In diesem Zusammenhang wird darauf hingewiesen, dass die vorliegende Erfindung zwar unter Bezugnahme auf die Wandungsdicke der Behältnisse beschrieben wurde, aber auch andere Messwerte erfasst werden könnten, wie etwa eine Transparenz der Wandungen, die Funktion einer Bodeninspektion, Ovalitätsprüfung der Mündung, ein Bodensektionsgewicht, eine Seitenwandungsinspektion, eine physikalische Dichte, das Vorhandensein von Störstellen und dergleichen.

Die vorliegende Erfindung ist weiterhin auf eine Vorrichtung zum Umformen von Kunststoffvorformlingen zu Kunststoffbehältnissen gerichtet. Diese Vorrichtung weist eine Transporteinrichtung auf, an der eine Vielzahl von Umformungsstationen zum Umformen von Kunststoffvorformlingen zu Kunststoffbehältnissen angeordnet ist, sowie eine in der Transportrichtung der Kunststoffbehältnisse nach den Umformungsstationen angeordnete Überprüfungseinrichtung, welche in wenigstens einem Bereich der hergestellten Kunststoffbehältnisse eine physikalische Eigenschaft derselben und insbesondere eine Wandungsdicke dieser Kunststoffbehältnisse bestimmt.

Erfindungsgemäß weist die Vorrichtung einen Einbringbereich auf, innerhalb dessen der Maschine bereits umgeformte Kunststoffbehältnisse (insbesondere als Testbehältnisse) zuführbar sind. Dieser Einbringbereich ist dabei bevorzugt durch einen Benutzer zugänglich. Alternativ oder zusätzlich ist dieser Einbringbereich für eine weitere Einrichtung, wie etwa eine Robotereinrichtung oder auch eine weitere Transporteinrichtung wie etwa einen Transportstern zugänglich.

Es wird daher vorgeschlagen, dass eine Möglichkeit geschaffen wird, über welche der Maschine Behältnisse und insbesondere Testbehältnisse zugeführt werden können. Insbesondere ist dabei dieser Bereich dazu geeignet und bestimmt, der Vorrichtung manuell derartige Testbehältnisse zuzuführen. Es wäre jedoch auch möglich, dass die Testbehältnisse unmittelbar und automatisiert beispielsweise aus einem Magazin für Testbehältnisse zugeführt werden. So kann die Maschine ein Magazin aufweisen, in dem Testbehältnisse, insbesondere auch Sätze an Testbehältnissen und insbesondere auch verschiedene Sätze an Testbehältnissen angeordnet sind. Der Benutzer kann auswählen, welche Testbehältnisse und/oder welche Sätze an Testbehältnissen der Vorrichtung zuzuführen sind. Die Überprüfungseinrichtung kann anhand dieser Testbehältnisse überprüfen, ob die Überprüfungseinrichtung selbst ordnungsgemäß arbeitet.

Bei einer weiteren bevorzugten Ausführungsform weist die Vorrichtung auch einen Entnahmebereich auf, in dem die Testbehältnisse wieder der Vorrichtung entnommen werden. Dieser Entnahmebereich ist dabei bevorzugt in einer Transportrichtung der Kunststoffbehältnisse stromabwärts des Einbringbereichs angeordnet. Es wäre jedoch auch möglich, dass der Entnahmebereich und der Einbringbereich in den gleichen Bereichen der Maschine angeordnet sind, etwa in einem vorgegebenen Bereich eines Transportsterns. Bei einer weiteren bevorzugten Ausführungsform könnte auch eine automatisierte Einbringung und Entnahme der Behältnisse vorgesehen sein. So könnten einzelne Testbehältnisse oder Sätze von Testbehältnissen mittels einer Transporteinrichtung aus einem Magazin zu der Überprüfungseinrichtung transportiert werden und nach einer Überprüfung der Überprüfungseinrichtung wieder zurück in die Magazineinrichtung transportiert werden.

Bei einer bevorzugten Ausführungsform weist die Vorrichtung daher eine Magazinvorrichtung auf, in der wenigstens einzelne und bevorzugt Sätze von Testbehältnissen aufbewahrt werden können. Diese Magazinvorrichtung ist dabei bevorzugt mit der Vorrichtung transporttechnisch koppelbar, so dass Behältnisse aus der Magazinvorrichtung zu der Überprüfungsvorrichtung, insbesondere über den oben erwähnten Einbringbereich transportiert werden können.

Bei einer weiteren vorteilhaften Ausführungsform weist die Vorrichtung eine Vergleichseinrichtung auf, welche dazu geeignet und bestimmt ist, von der Überprüfungseinrichtung ermittelte Wanddicken mit Referenzwanddicken, das heißt tatsächlichen Wanddicken, der jeweiligen Testbehältnisse zu vergleichen.

Bei einer bevorzugten Ausführungsform weisen wie oben erwähnt die Umformungsstationen jeweils Blasformen auf, welche zum Expandieren der Kunststoffvorformlinge dienen. Bei einer weiteren bevorzugten Ausführungsform weisen die Umformungsstationen jeweils Beaufschlagungseinrichtungen wie beispielsweise Blasdüsen auf, welche die Kunststoffvorformlinge zu deren Expansion mit einem fließfähigen Medium beaufschlagen. Dabei handelt es sich bei diesem fließfähigen Medium insbesondere um Luft und insbesondere um Druckluft. Es wäre jedoch auch möglich, dass es sich bei dem fließfähigen Medium um eine Flüssigkeit wie beispielsweise das abzufüllende Getränk handelt.

Bei einer weiteren vorteilhaften Ausführungsform weisen die Umformungsstationen jeweils stangenartige Körper auf, welche in die Kunststoffvorformlinge einführbar sind, um diese in deren Längsrichtung zu dehnen.

Bei einer weiteren vorteilhaften Ausführungsform weist die Vorrichtung eine Erwärmungseinrichtung auf, welche in einer Transporteinrichtung der Kunststoffbehältnisse vor den Umformungsstationen angeordnet ist. Diese Erwärmungseinrichtung kann dabei die Kunststoffvorformlinge erwärmen.

Bei einer weiteren vorteilhaften Ausführungsform weist die Vorrichtung eine weitere Transporteinrichtung auf, welche die gefertigten Behältnisse von den Umformungsstationen zu der Überprüfungseinrichtung transportiert. Vorteilhaft ist dabei der Einbringbereich in einem Bereich dieser weiteren Transporteinrichtung angeordnet. So kann beispielsweise eine Transporteinrichtung wie insbesondere aber nicht ausschließlich ein Transportstern vorgesehen sein, der die geblasenen Behältnisse aus den Umformungsstationen abführt und zur weiteren Verarbeitung transportiert.

Bevorzugt weist diese weitere Transporteinrichtung ebenfalls eine Vielzahl von Halteelementen auf. Vorteilhaft handelt es sich bei diesen Halteelementen um Greifklammern, welche die gefertigten Behältnisse in einem Bereich derselben greifen können, etwa in einem Mündungsbereich derselben. Diese Greifklammern können dabei um diese Mündungen der Behältnisse anlegbar sein. Bevorzugt sind diese Greifklammern manuell betätigbar, sodass durch einen Benutzer in diese Greifklammern ein Behältnis und insbesondere ein Testbehältnis eingebracht werden kann. Auch ist es denkbar, dass die Transporteinrichtung in einem Testmodus betrieben werden kann, beispielsweise in einem Modus, in welchem die Behältnisse vor die Überprüfungseinrichtung transportiert und dort angehalten und präzise vermessen werden können.

Bei einer weiteren vorteilhaften Ausführungsform weist die Vorrichtung wenigstens ein Testbehältnis auf, welches in wenigstens einem Bereich einer Wandung des Testbehältnisses eine bekannte Wandungsdicke aufweist. Bevorzugt ist dabei dieses Testbehältnis über den Einbringbereich in die Vorrichtung einbringbar. Vorteilhaft handelt es sich hierbei um ein Testbehältnis, welches mit der entsprechenden Umformungseinrichtung umgeformt wurde.

Bei einer weiteren vorteilhaften Ausführungsform weist die Vorrichtung auch eine Steuerungseinrichtung auf, welche die Vorrichtung zum Umformen von Kunststoffvorformlingen zu Kunststoffbehältnissen steuert. Vorteilhaft steuert diese Steuerungseinrichtung dabei die Vorrichtung zum Umformen und insbesondere die einzelnen Umformungsstationen auf Basis eines Prüfergebnisses, welches von der besagten Überprüfungseinrichtung ermittelt wurde. Vorteilhaft ist die Steuerungseinrichtung auch dazu geeignet und bestimmt, eine Erwärmungseinrichtung zum Erwärmen der Kunststoffvorformlinge zu steuern.

Bei einer weiteren vorteilhaften Ausführungsform weist die Vorrichtung eine Speichereinrichtung auf, welche dazu geeignet und bestimmt ist, die von der Überprüfungseinrichtung ermittelten Messergebnisse und insbesondere die ermittelte Wandungsstärke zu dokumentieren.

Bevorzugt können dabei die von der Speichereinrichtung ermittelten Werte auch mit einer Datumsangabe und insbesondere auch mit einer Zuordnung zu dem jeweiligen Testbehältnis gemessen werden. Zu diesem Zweck weist die Überprüfungseinrichtung auch eine Bildaufnahmeeinrichtung auf, welche dazu geeignet und bestimmt ist, eine Markierung, welche sich auf den Testbehältnissen befindet, zu erfassen. Insbesondere handelt es sich dabei um eine Markierung wie beispielsweise einen zweidimensionalen Code, der eine eindeutige Identifizierung des Testbehältnisses ermöglicht.

Insbesondere weist die erfindungsgemäße Vorrichtung auch einen Satz an Testbehältnissen auf. Diese Testbehältnisse können sich dabei insbesondere in ihren jeweiligen Wandungsdicken unterscheiden.

Die vorliegende Erfindung ist weiterhin auf ein Testbehältnis zum Überprüfen einer Überprüfungseinrichtung und insbesondere einer Wanddickenüberprüfungseinrichtung gerichtet. Dieses Testbehältnis weist dabei einen Bodenbereich, einen sich an den Bodenbereich anschließenden Grundkörper und einen sich an diesen Grundkörper anschließenden Mündungsbereich auf. Dabei ist dieses Behältnis insbesondere aus einem Kunststoff und besonders bevorzugt aus PET gefertigt.

Weiterhin weist erfindungsgemäß der Grundkörper einen Wandungsbereich mit definierten bzw. bekannten Wandungsstärken auf. Vorteilhaft ändern sich die jeweiligen Wandungsstärken in einer Längsrichtung und/oder einer Umfangsrichtung des Behältnisses und insbesondere auch in einer Längsrichtung des Behältnisses.

Weitere Vorteile und Ausführungsformen ergeben sich aus den beigefügten Zeichnungen:
Darin zeigen:
- Fig. 1: Eine schematische Darstellung einer erfindungsgemäßen Vorrichtung;
- Fig. 2: Eine Darstellung einer Auswertung eines Testbehältnisses.

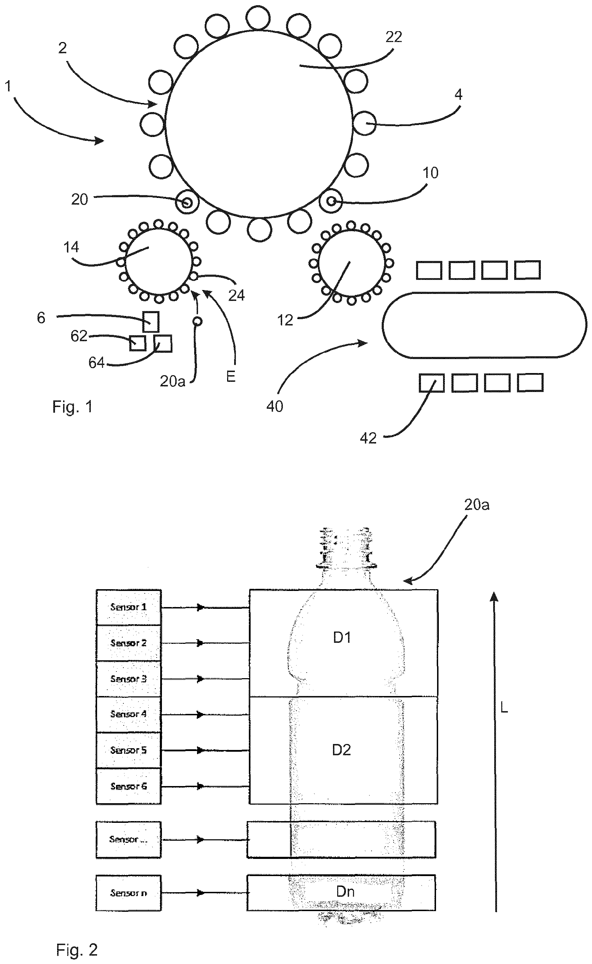

Figur 1 zeigt eine schematische Darstellung einer erfindungsgemäßen Vorrichtung 1 zum Umformen von Kunststoffvorformlingen zu Kunststoffbehältnissen. Diese Vorrichtung weist eine Erwärmungseinrichtung 40 auf, welche dazu dient, um Kunststoffvorformlinge zu erwärmen. Diese Erwärmungseinrichtung weist in dieser Ausführungsform eine Vielzahl von Heizelementen auf, welche stationär angeordnet sind und an welchen die Kunststoffvorformlinge vorbeitransportiert werden. An diese Erwärmungseinrichtung 40 schließt sich eine Transporteinrichtung 12 in Form eines Transportsterns an, der die erwärmten Kunststoffvorformlinge den einzelnen Umformungsstationen 4 zuführt. Diese Umformungsstationen 4 sind dabei an einem bewegbaren und insbesondere drehbaren Träger 22, wie insbesondere aber nicht ausschließlich einem sogenannten Blasrad 22, angeordnet. Bei einer alternativen Maschinenbauform können die Umformungsstationen z.B. an einer linearen Transportstrecke angeordnet sein. Die Kunststoffvorformlinge 10 werden den einzelnen Umformungsstationen zugeführt und im Produktionsbetrieb durch Beaufschlagung mit Druckluft zu Kunststoffbehältnissen und insbesondere Kunststoffflaschen 20 umgeformt. Das Bezugszeichen 2 kennzeichnet in seiner Gesamtheit die Transporteinrichtung, welche die Kunststoffvorformlinge und/oder auch die Umformungsstationen 4 transportiert.

Das Bezugszeichen 14 kennzeichnet eine weitere Transporteinrichtung, wie insbesondere einen weiteren Transportstern, der die gefertigten Kunststoffbehältnisse 20 von den Umformungsstationen abtransportiert und beispielsweise zu einer (nicht gezeigten) weiteren Station weitertransportiert.

Das Bezugszeichen E kennzeichnet einen Einbringbereich, in den Testbehältnisse eingebracht werden. Das Bezugszeichen 6 kennzeichnet die Überprüfungseinrichtung, welche insbesondere eine Wanddickenvermessung der einzelnen gefertigten Kunststoffbehältnisse vornimmt. Diese Überprüfungseinrichtung 6 arbeitet dabei insbesondere berührungslos. Der Einbringbereich E ist derart gestaltet, dass in dem Bereich zwischen den Umformungsstationen 4 und der Überprüfungseinrichtung 6 einzelne Kunststoffbehältnisse bzw. Kunststoffflaschen, aber auch Sätze an Testbehältnissen eingebracht werden können. Im Rahmen eines speziellen Testmodus überprüft die Überprüfungseinrichtung 6 die Wandstärken der einzelnen Kunststoffbehältnisse und speichert diese bevorzugt auch ab. Zu diesem Zweck weist die Vorrichtung eine Speichereinrichtung 62 auf, welche die ermittelten Werte für die Wandungsdicken abspeichert. Bevorzugt weist die Vorrichtung auch eine Vergleichseinrichtung 64 auf, welche die von der Überprüfungseinrichtung ermittelten Wandstärken mit den tatsächlichen Wandstärken der Testbehältnisse vergleicht.

Bevorzugt misst dabei die Überprüfungseinrichtung die Wandstärken in mehreren Bereichen der Kunststoffvorformlinge entlang deren Längsrichtung. In Figur 1 steht die Längsrichtung der Kunststoffvorformlinge 10 und auch der Kunststoffbehältnisse 20 senkrecht zur Figurenebene.

Figur 2 veranschaulicht die Überprüfung der Überprüfungseinrichtung 6. Die Überprüfungseinrichtung 6 weist dabei hier eine Vielzahl von Sensoren Sensor 1 bis Sensor n auf. Diese Sensoren sind jeweils dazu geeignet und bestimmt, Wandstärken der geblasenen Kunststoffbehältnisse zu ermitteln. Bevorzugt sind diese Sensoren in einer Längsrichtung L des Behältnisses 20a übereinander angeordnet, so dass sie in dieser Längsrichtung L übereinander liegende Bereiche der Wandung der Behältnisse vermessen können.

Das Kunststoffbehältnis 20 bzw. hier das Testbehältnis 20a weist variierende Wandstärken in einzelnen Bereichen seines Grundkörpers auf. Diese Bereiche sind hier mit D1, D2 und Dn gekennzeichnet. Die einzelnen Sensoren der Überprüfungseinrichtung messen diese Wandstärken und bevorzugt werden die einzelnen Wandstärken abgespeichert. Weiterhin ist es auch möglich, dass die gemessenen Wandungsstärken des Testbehältnisses 20a mittels einer Anzeigeeinrichtung etwa als Histogramm ausgegeben werden können. Weiterhin werden die von der Überprüfungseinrichtung 6 gemessenen Wandstärken mit den tatsächlichen (bekannten) Wandstärken des Testbehältnisses 20a verglichen. Auf diese Weise kann festgestellt werden, ob die Überprüfungseinrichtung ordnungsgemäß arbeitet, wobei insbesondere diese Überprüfung für die einzelnen Sensoren unabhängig erfolgen kann.

So wäre es beispielsweise möglich, dass im Rahmen dieser Überprüfung festgestellt wird, dass einzelne Sensoren, beispielsweise der Sensor 4, nicht ordnungsgemäß arbeitet. Dies kann bedeuten, dass auf zumindest mittlere oder lange Sicht dieser Sensor ausgewechselt werden muss oder aber auch, dass eine Neukalibrierung des Sensors erforderlich ist. Für einen vorübergehenden Arbeitsbetrieb ist es jedoch auch möglich, dass im Produktionsbetrieb die Ergebnisse dieses Sensors 4 nicht berücksichtigt werden bzw. bei der Beurteilung, ob ein Behältnis ordnungsgemäß geblasen wurde, ausgeklammert werden. Bevorzugt weist daher die Vorrichtung auch eine Steuerungseinrichtung und/oder eine Prozessoreinrichtung auf, welche bewirkt, dass in Abhängigkeit von einem Überprüfungsergebnis festgelegt wird, ob einzelne Sensoren der Überprüfungseinrichtung aktiviert oder nicht aktiviert werden, oder ob die von diesen einzelnen Sensoren ausgegebenen Messergebnisse bei dem Arbeitsbetrieb berücksichtigt werden sollen.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: gesamte Transporteinrichtung
- 4: Umformungsstationen
- 6: Überprüfungseinrichtung
- 10: Kunststoffvorformlinge
- 12: Transporteinrichtung
- 14: weitere Transporteinrichtung / weiterer Transportstern
- 20: Kunststoffflaschen
- 20a: Testbehältnis
- 22: Träger, Blasrad
- 40: Erwärmungseinrichtung
- 42: Heizelement
- 62: Speichereinrichtung
- 64: Vergleicheinrichtung
- E: Einbringbereich
- D1, D2, Dn: Wanddickenn
- L: Längsrichtung

## Patentansprüche

1. Verfahren zum Überprüfen einer Vorrichtung (1) zum Umformen von Kunststoffvorformlingen (10) zu Kunststoffbehältnissen (20), wobei die Vorrichtung (1) eine Transporteinrichtung (2) aufweist, an der eine Vielzahl von Umformungsstationen zum Umformen von Kunststoffvorformlingen (10) zu Kunststoffbehältnissen (20) angeordnet ist sowie eine in einer Transportrichtung der Kunststoffbehältnisse nach den Umformungsstationen (4) angeordnete Überprüfungseinrichtung (6), welche in wenigstens einem Bereich der hergestellten Kunststoffbehältnisse (20) eine Wandungsdicke dieser Kunststoffbehältnisse (20) bestimmt, **gekennzeichnet durch** die Schritte:
- einbringen wenigstens eines Testbehältnisses (20a), welche wenigstens abschnittsweise eine vorgegebene und/oder bekannte Wandungsdicke (D_{Ist}) aufweist, in einen Einbringbereich (E)
- Bestimmung einer ersten Wandungsdicke (D1 ,D2, Dn) in wenigstens einem Bereich des Testbehältnisses (20a) durch die Überprüfungseinrichtung (6).

2. Verfahren nach Anspruch 1,
**dadurch gekennzeichnet, dass**
die von der Überprüfungseinrichtung (6) festgestellte Wandungsdicke (D1) mit der bekannten Wandungsdicke dieses Testbehältnisses (20a) verglichen wird.

3. Verfahren nach wenigstens einem der vorangegangenen Ansprüchen,
**dadurch gekennzeichnet, dass**
das wenigstens eine Testbehältnis (20a) in der Transportrichtung der Kunststoffbehältnisse (20) nach den Umformungsstationen (4) eingebracht wird.

4. Verfahren nach wenigstens einem der vorangegangenen Ansprüchen,
**dadurch gekennzeichnet, dass**
die Überprüfungseinrichtung (6) in mehreren Bereichen des Kunststoffbehältnisses dessen Wandungsdicke (D1, D2, Dn) bestimmt, wobei diese Bereiche bevorzugt in einer Längsrichtung (L) des Kunststoffbehältnisses (20a) übereinander angeordnet sind.

5. Verfahren nach wenigstens einem der vorangegangenen Ansprüche,
**dadurch gekennzeichnet, dass**
das Testbehältnis (20a) in seiner Längsrichtung (L) abweichende Wandungsstärken aufweist.

6. Verfahren nach wenigstens einem der vorangegangenen Ansprüche,
**dadurch gekennzeichnet, dass**
mehrere Testbehältnisse (20a) eingebracht werden.

7. Verfahren nach wenigstens einem der vorangegangenen Ansprüche,
**dadurch gekennzeichnet, dass**
wenigstens ein Testergebnis mit Daten und insbesondere Wanddicken ausgegeben wird, welche für das Testbehältnis charakteristisch sind.

8. Vorrichtung (1) zum Umformen von Kunststoffvorformlingen (10) zu Kunststoffbehältnissen (20), wobei die Vorrichtung (1) eine Transporteinrichtung (2) aufweist, an der eine Vielzahl von Umformungsstationen (4) zum Umformen von Kunststoffvorformlingen (10) zu Kunststoffbehältnissen (20) angeordnet ist sowie eine in einer Transportrichtung der Kunststoffbehältnisse (20) nach den Umformungsstationen (4) angeordnete Überprüfungseinrichtung (6), welche in wenigstens einem Bereich der hergestellten Kunststoffbehältnisse (20) eine Wandungsdicke dieser Kunststoffbehältnisse (20) bestimmt,
**dadurch gekennzeichnet, dass**
die Vorrichtung einen Einbringbereich (E) aufweist, innerhalb dessen der Maschine Testbehältnisse (20a), welche wenigstens abschnittsweise eine vorgegebene und/oder bekannte Wandungsdicke (Dlst) aufweisen, zuführbar sind.

9. Vorrichtung (1) nach Anspruch 8,
**dadurch gekennzeichnet, dass**
die Vorrichtung (1) eine weitere Transporteinrichtung (14) aufweist, welche die gefertigten Behältnisse (20a) von den Umformungsstationen (4) zu der Überprüfungseinrichtung (6) transportiert und der Einbringbereich (E) in einem Bereich dieser weiteren Transporteinrichtung (14) angeordnet ist.

10. Vorrichtung (1) nach wenigstens einem der vorangegangenen Ansprüche,
**dadurch gekennzeichnet, dass**
die Vorrichtung wenigstens ein Testbehältnis (20a) aufweist, welches in wenigstens einem Bereich eine bekannte Wandungsdicke aufweist, wobei dieses Testbehältnis (20a) über den Einbringbereich (E) in die Vorrichtung (1) einbringbar ist.

## Claims

1. A method for inspecting a device (1) for forming plastic preforms (10) into plastic containers (20), the device (1) having a transport unit (2), on which a plurality of forming stations for forming plastic preforms (10) into plastic containers (20) is arranged, and an inspection unit (6) that is arranged downstream of the forming stations (4) in a transport direction of the plastic containers and that determines a wall thickness of these plastic containers (20) in at least one region of the plastic containers (20) produced,
**characterised by** the following steps:
- introducing at least one test container (20a) that has a predetermined and/or known wall thickness (Dᵢₛₜ) at least in sections into an introduction area (E)
- determining a first wall thickness (D1, D2, Dn) in at least one area of the test container (20a) by the inspection unit (6).

2. The method as claimed in claim 1,
**characterised in that**
the wall thickness (D1) determined by the inspection unit (6) is compared with the known wall thickness of this test container (20a).

3. The method as claimed in at least one of the preceding claims,
**characterised in that**
the at least one test container (20a) is introduced downstream of the forming stations (4) in the transport direction of the plastic containers (20).

4. The method as claimed in at least one of the preceding claims,
**characterised in that**
the inspection unit (6) determines the wall thickness (D1, D2, Dn) of the plastic container in several regions of the plastic container, these regions preferably being arranged one above the other in a longitudinal direction (L) of the plastic container (20a).

5. The method as claimed in at least one of the preceding claims,
**characterised in that**
the test container (20a) has wall thicknesses that deviate in its longitudinal direction (L).

6. The method as claimed in at least one of the preceding claims,
**characterised in that**
several test containers (20a) are introduced.

7. The method as claimed in at least one of the preceding claims,
**characterised in that**
at least one test result is output with data and in particular wall thicknesses which are characteristic of the test container.

8. A device (1) for forming plastic preforms (10) into plastic containers (20), the device (1) having a transport unit (2), on which a plurality of forming stations (4) for forming plastic preforms (10) into plastic containers (20) is arranged, and an inspection unit (6) that is arranged downstream of the forming stations (4) in a transport direction of the plastic containers (20) and that determines a wall thickness of these plastic containers (20) in at least one region of the plastic containers (20) produced,
**characterised in that**
the device has an introduction area (E), within which test containers (20a) can be fed to the machine that have a predetermined and/or known wall thickness (Dist) at least in sections.

9. The device (1) as claimed in claim 8,
**characterised in that**
the device (1) has a further transport unit (14) that transports the manufactured containers (20a) from the forming stations (4) to the inspection unit (6), and the introduction area (E) is arranged in a region of this further transport unit (14).

10. The device (1) as claimed in at least one of the preceding claims,
**characterised in that**
the device has at least one test container (20a) that has a known wall thickness in at least one region, which test container (20a) can be introduced into the device (1) via the introduction region (E).

## Revendications

1. Procédé destiné à vérifier un dispositif (1) pour façonner des préformes en plastique (10) afin d'en faire des contenants en plastique (20), dans lequel le dispositif (1) présente un équipement de transport (2) contre lequel sont agencés une pluralité de postes de façonnage pour façonner des préformes en plastique (10) afin d'en faire des contenants en plastique (20), ainsi qu'un équipement de vérification (6) agencé après les postes de façonnage (4) dans une direction de transport des contenants en plastique, lequel détermine dans au moins une zone des contenants en plastique (20) fabriqués une épaisseur de paroi de ces contenants en plastique (20),
**caractérisé par** les étapes consistant à :
- insérer au moins un contenant de test (20a), lequel présente au moins par endroits une épaisseur de paroi (Dist) prédéfinie et/ou connue, dans une zone d'insertion (E)
- déterminer une première épaisseur de paroi (D1, D2, Dn) dans au moins une zone du contenant de test (20a) par l'équipement de vérification (6).

2. Procédé selon la revendication 1,
**caractérisé en ce que**
l'épaisseur de paroi (D1) constatée par l'équipement de vérification (6) est comparée à l'épaisseur de paroi connue de ce contenant de test (20a).

3. Procédé selon au moins l'une des revendications précédentes,
**caractérisé en ce que**
le au moins un contenant de test (20a) est introduit après les postes de façonnage (4) dans la direction de transport des contenants en plastique (20).

4. Procédé selon au moins l'une des revendications précédentes,
**caractérisé en ce que**
l'équipement de vérification (6) détermine dans plusieurs zones du contenant en plastique l'épaisseur de paroi (D1, D2, Dn) de celui-ci, dans lequel ces zones sont de préférence agencées les unes pardessus les autres dans une direction longitudinale (L) du contenant de test (20a).

5. Procédé selon au moins l'une des revendications précédentes,
**caractérisé en ce que**
le contenant de test (20a) présente des épaisseurs de paroi divergentes dans sa direction longitudinale (L).

6. Procédé selon au moins l'une des revendications précédentes,
**caractérisé en ce que**
plusieurs contenants de test (20a) sont introduits.

7. Procédé selon au moins l'une des revendications précédentes,
**caractérisé en ce que**
au moins un résultat de test est fourni avec des données et en particulier des épaisseurs de paroi, lesquelles sont caractéristiques du contenant de test.

8. Dispositif (1) destiné à façonner des préformes en plastique (10) pour en faire des contenants en plastique (20), dans lequel le dispositif (1) présente un équipement de transport (2) contre lequel sont agencés une pluralité de postes de façonnage (4) pour façonner des préformes en plastique (10) afin d'en faire des contenants en plastique (20), ainsi qu'un équipement de vérification (6) agencé après les postes de façonnage (4) dans une direction de transport des contenants en plastique (20), lequel détermine dans au moins une zone des contenants en plastique (20) fabriqués une épaisseur de paroi de ces contenants en plastique (20),
**caractérisé en ce que**
le dispositif présente une zone d'insertion (E) à l'intérieur de laquelle des contenants de test (20a), lesquels présentent au moins par endroits une épaisseur de paroi (Dist) prédéfinie et/ou connue, peuvent être amenés à la machine.

9. Dispositif (1) selon la revendication 8,
**caractérisé en ce que**
le dispositif (1) présente un autre équipement de transport (14), lequel transporte les contenants (20a) fabriqués depuis les postes de façonnage (4) vers l'équipement de vérification (6), et la zone d'insertion (E) est agencée dans une zone de cet autre équipement de transport (14).

10. Dispositif (1) selon au moins l'une des revendications précédentes,
**caractérisé en ce que**
le dispositif présente au moins un contenant de test (20a), lequel présente dans au moins une zone une épaisseur de paroi connue, dans lequel ce contenant de test (20a) peut être introduit dans le dispositif (1) via la zone d'insertion (E).
